(19) Europäisches Patentamt
European Patent Office
Office européen des brevets

(11) EP 4 576 307 B1

(12) **EUROPEAN PATENT SPECIFICATION**

(45) Date of publication and mention of the grant of the patent:
**08.07.2026 Bulletin 2026/28**

(21) Application number: **24220813.0**

(22) Date of filing: **17.12.2024**

(51) International Patent Classification (IPC):
***H01M 10/0567*** *(2010.01)*

(52) Cooperative Patent Classification (CPC):
**H01M 10/0567; H01M 4/525; H01M 10/052; H01M 10/0525; H01M 10/0569;** H01M 2300/0025; Y02E 60/10

(54) **ELECTROLYTE FOR LITHIUM SECONDARY BATTERY AND LITHIUM SECONDARY BATTERY INCLUDING THE SAME**

ELEKTROLYT FÜR LITHIUMSEKUNDÄRBATTERIE UND LITHIUMSEKUNDÄRBATTERIE DAMIT

ÉLECTROLYTE POUR BATTERIE SECONDAIRE AU LITHIUM ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.12.2023 KR 20230184832**

(43) Date of publication of application:
**25.06.2025 Bulletin 2025/26**

(73) Proprietors:
- **SK On Co., Ltd.**
  **Seoul 03161 (KR)**
- **SK innovation Co., Ltd.**
  **Seoul 03188 (KR)**

(72) Inventors:
- **KIM, Jeong Yun**
  **34124 Daejeon (KR)**
- **PARK, Min Woo**
  **34124 Daejeon (KR)**
- **KIM, Myoung Lae**
  **34124 Daejeon (KR)**
- **JEON, Hyun Ji**
  **34124 Daejeon (KR)**
- **CHO, In Haeng**
  **34124 Daejeon (KR)**

(74) Representative: **Stolmár & Partner Patentanwälte PartG mbB**
**Blumenstraße 17**
**80331 München (DE)**

(56) References cited:
**WO-A1-2023/224187**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 576 307 B1

## Description

### BACKGROUND

### 1. Field of the Invention

Embodiments of the present disclosure relate generally to an electrolyte for a lithium secondary battery and a lithium secondary battery including the same, and more specifically, to an electrolyte for a lithium secondary battery which includes a solvent and an electrolyte salt, and a lithium secondary battery including the electrolyte. More specifically, the embodiments of the present disclosure relate to an improved electrolyte that improves the safety, and performance characteristics of a lithium secondary battery.

### 2. Description of the Related Art

A secondary battery is a battery which can be repeatedly charged and discharged. With rapid progress of the information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, a hybrid vehicle, and the like., as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and its light weight, such that development thereof has proceeded in this regard.

Typically, a lithium secondary battery may include an electrode assembly including a cathode, an anode, and a separation membrane (separator) disposed between the anode and cathode. The lithium secondary battery also includes an electrolyte in which the electrode assembly is impregnated. In addition, the lithium secondary battery may further include a housing, for example, a pouch-shaped outer case in which the electrode assembly and the electrolyte are housed.

A lithium secondary battery having longer lifespan, high capacity, and operational stability is required as the application range thereof is expanded. Accordingly, a lithium secondary battery which provides uniform output and capacity even during repeated charging and discharging is preferable.

However, according to the repeated charging and discharging, may reduce the output and capacity due to damage to the surface of the nickel-based lithium metal oxide used as a cathode active material, and a side reaction between the nickel-based lithium metal oxide and the electrolyte may occur. Also, stability of the battery may be deteriorated in a severe environment of high or low temperature. Thus, a lithium secondary battery having a longer lifespan, high capacity, enhanced safety, and operational stability is required.

WO2023/224187 discloses a lithium secondary battery.

### SUMMARY

An embodiment of the present disclosure provides a lithium secondary battery with improved safety and performance characteristics.

An embodiment of the present disclosure provides an electrolyte for a lithium secondary battery which may impart improved initial characteristics and improved low-temperature and high-temperature characteristics.

Another embodiment of the present disclosure provides a lithium secondary battery including the electrolyte, which has improved initial characteristics, and low-temperature and high-temperature characteristics.

According to an embodiment of the present disclosure, there is provided an electrolyte for a lithium secondary battery, including an organic solvent; a lithium salt; and a phosphate-based additive which comprises a compound represented by Formula 1 below:

[Formula 1]

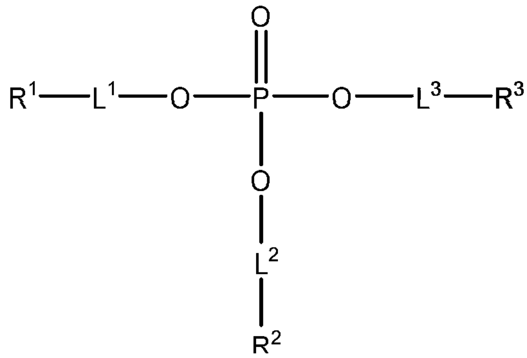

In Formula 1, $L^1$, $L^2$ and $L^3$ may be each independently an alkylene group having 1 to 8 carbon atoms.

$R^1$ may be a heterocycloalkyl group having 2 to 8 carbon atoms, $R^2$ may be a cyano group, and $R^3$ may be a heterocycloalkyl group having 2 to 8 carbon atoms or a cyano group.

In some embodiments, in Formula 1, $R^1$ may be a heterocycloalkyl group having 2 to 8 carbon atoms, which includes oxygen.

In some embodiments, in Formula 1, $R^1$ may be a tetrahydrofuran group.

In some embodiments, in Formula 1, $R^1$ and $R^3$ may be the same as each other, and $R^1$ and $R^3$ may be heterocycloalkyl groups.

In some embodiments, in Formula 1, $R^2$ and $R^3$ may be the same as each other, and $R^2$ and $R^3$ may be cyano groups.

In some embodiments, the phosphate-based additive may include at least one of a compound represented by Formula 1-1 below and a compound represented by Formula 1-2 below:

[Formula 1-1]

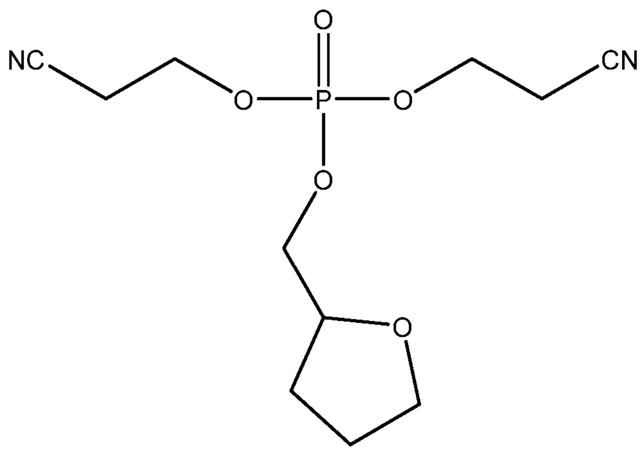

[Formula 1-2]

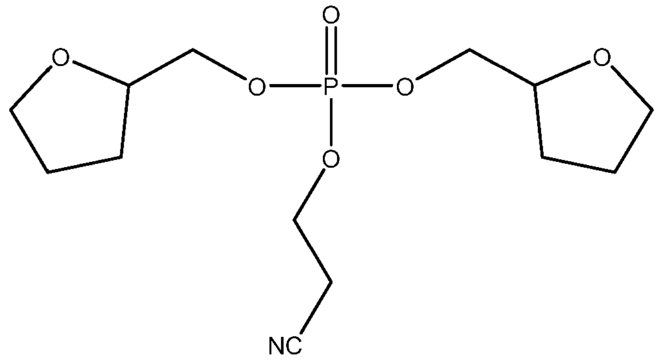

In some embodiments, the phosphate-based additive may include a compound represented by Formula 1-1 and a compound represented by Formula 1-2.

In some embodiments, a weight ratio of the compound represented by Formula 1-2 to the compound represented by Formula 1-1 may be 0.1 to 9.

In some embodiments, the phosphate-based additive may be included in an amount of 0.01 % by weight to 10% by weight based on a total weight of the electrolyte.

In some embodiments, the electrolyte may further include at least one auxiliary additive selected from the group consisting of a cyclic carbonate compound, a fluorine-substituted cyclic carbonate compound, a sultone compound, a cyclic sulfate compound, a phosphate compound and an borate phosphate compound.

In some embodiments, the auxiliary additive may be included in an amount of 0.01 % by weight to 5% by weight based on the total weight of the electrolyte.

In some embodiments, the organic solvent may include at least one selected from the group consisting of a carbonate solvent, an ester solvent, a ketone solvent, an alcohol solvent and an aprotic solvent.

In some embodiments, the lithium salt may include at least one selected from the group consisting of lithium tetrafluoroborate ($LiBF_4$), lithium hexafluorophosphate ($LiPF_6$) and lithium difluorophosphate ($LiPO_2F_2$).

According to another embodiment of the present disclosure, there is provided a lithium secondary battery including a cathode; an anode disposed to face the cathode; and the above-described electrolyte for a lithium secondary battery.

In some embodiments, the cathode may include lithium iron phosphate ($LiFePO_4$, LFP).

In some embodiments, the cathode may include a lithium-nickel metal oxide.

The electrolyte for a lithium secondary battery according to embodiments of the present disclosure may include a phosphate-based additive, thereby improving initial capacity characteristics and other capacity characteristics.

The lithium secondary battery according to embodiments of the present disclosure may include the electrolyte for a secondary battery, thereby improving capacity characteristics at low and high temperatures.

The electrolyte for a lithium secondary battery and the lithium secondary battery of the present disclosure may be widely applied to green technology fields such as an electric vehicle, and a battery charging station, as well as other solar power generation and wind power generation using the batteries. The electrolyte for a lithium secondary battery and the secondary battery of the present disclosure may be used in an eco-friendly electric vehicle, and a hybrid vehicle, etc., which are intended to prevent climate change by suppressing air pollution from greenhouse gas emissions.

## BRIEF DESCRIPTION OF THE DRAWINGS

The above and other objects, features and other advantages of the embodiments of the present disclosure will be more clearly understood from the following detailed description taken in conjunction with the accompanying drawings, in which:

FIGS. 1 and 2 are respectively, a schematic plan view and a cross-sectional view illustrating a lithium secondary battery according to embodiments of the present disclosure; and

FIGS. 3 and 4 are graphs illustrating results measured by 1H-nuclear magnetic resonance (NMR) of a phosphate-based additive according to embodiments of the present disclosure

DETAILED DESCRIPTION

According to various embodiments of the present disclosure, there are provided an electrolyte for a secondary battery including a phosphate-based additive, and a secondary battery including the electrolyte for a secondary battery.

The inventive electrolyte is suitable for a secondary battery, and in particular for a lithium secondary battery. The electrolyte, according to embodiments, may include an organic solvent, an electrolyte substance such as a lithium salt, and a phosphate-based additive.

According to various embodiments, the phosphate-based additive may include a compound represented by Formula 1.

Formula 1

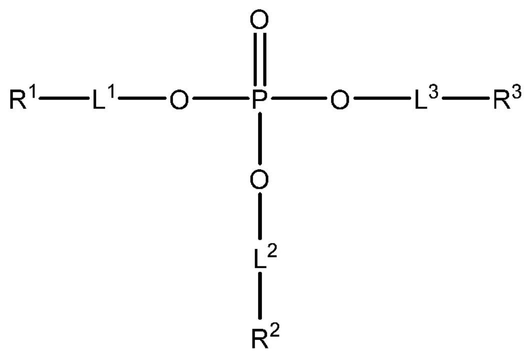

In Formula 1, $L^1$, $L^2$ and $L^3$ may each independently be an alkylene group having 1 to 8, 1 to 6, or 1 to 4 carbon atoms.

In Formula 1, $R^1$ may be a heterocycloalkyl group having 2 to 8, 2 to 6, or 3 to 5 carbon atoms.

In Formula 1, $R^2$ may be a cyano group.

In Formula 1, $R^3$ may be a heterocycloalkyl group having 2 to 8, 2 to 6, or 3 to 5 carbon atoms or a cyano group.

For example, the phosphate-based additive may interact with a cathode active material to improve capacity characteristics of the secondary battery.

By preventing the cathode active material from being deformed even at a high temperature (e.g., 60°C) and low temperature (e.g., -10°C) through the phosphate-based additive, stable capacity characteristics and lifespan characteristics of the secondary battery may be acquired.

As used in the present disclosure, the term "heterocycloalkyl group" is used to mean a compound in which a carbon atom (C) of a ring structure formed of a saturated hydrocarbon is substituted with an atom other than the carbon atom. For example, the heterocycloalkyl group may include all structures in which the carbon atom of a ring structure formed of a saturated hydrocarbon is substituted with an oxygen atom (O), a nitrogen atom (N), a phosphorus atom (P) or the like.

A stable protective layer may be formed at a high temperature by a phosphate group included in the phosphate compound represented by Formula 1. Accordingly, the phosphate compound represented by Formula 1 may stably protect an active material, such that the high-temperature lifespan characteristics and high-temperature capacity characteristics of the secondary battery may be improved. In addition, the phosphate compound represented by Formula 1 includes a cyano group and a heterocycloalkyl group, such that a solid electrolyte interface (SEI) film or a cathode electrolyte interface (CEI) film may be stably formed on the surface of an anode or a cathode while the secondary battery is charged/-discharged. Accordingly, a decrease in lifespan due to expansion and contraction of the anode active material may be suppressed, and an internal resistance of the secondary battery may be reduced.

The compound represented by Formula 1 may include both an alkyl group whose terminal is substituted with a heterocycloalkyl group and an alkyl group whose terminal is substituted with a cyano group. Accordingly, the compound represented by Formula 1 includes both the heterocycloalkyl group and the cyano group at the terminals thereof, such that the high-temperature and low-temperature characteristics may be improved together.

In some embodiments, $R^1$ may be a heterocycloalkyl group having 2 to 8, 2 to 6, or 3 to 5 carbon atoms, which includes oxygen. Thereby, the compound represented by Formula 1 may stably form a hydrogen bond by the oxygen included in the heterocycloalkyl group even at a low temperature. Accordingly, the film may be stably maintained, and the low-temperature characteristics of the lithium secondary battery may be improved.

In one embodiment, $R^1$ may be a tetrahydrofuran group. Accordingly, the film may be more stably maintained by the hydrogen bond of the tetrahydrofuran even at a low temperature, and the low-temperature characteristics may be

further improved.

In some embodiments, $R^1$ and $R^3$ may be the same as each other. In some embodiments, $R^2$ and $R^3$ may be the same as each other. Accordingly, the initial capacity characteristics, and low-temperature and high-temperature characteristics of a secondary battery including the compound represented by Formula 1 may be further improved.

In one embodiment, $R^1$ and $R^3$ may be heterocycloalkyl groups having the same number of carbon atoms and the same structure. Accordingly, the low-temperature characteristics of the secondary battery including the compound represented by Formula 1 may be further improved.

In one embodiment, $R^2$ and $R^3$ may be cyano groups. Accordingly, the high-temperature characteristics of the secondary battery including the compound represented by Formula 1 may be further improved.

In some embodiments, the phosphate-based additive may include at least one of a compound represented by Formula 1-1 below and a compound represented by Formula 1-2 below.

For example, the phosphate-based additive may include a compound represented by Formula 1-1 below.

[Formula 1-1]

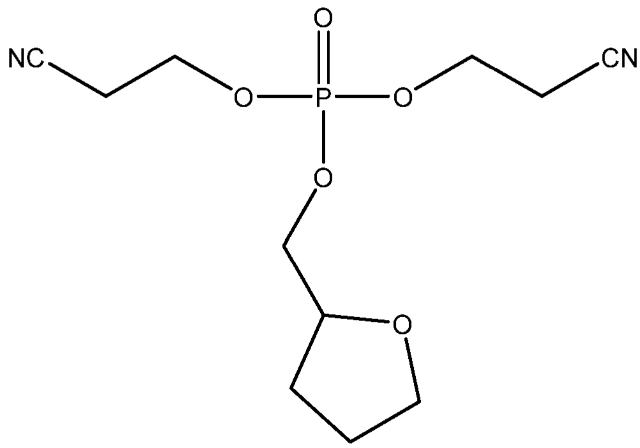

Accordingly, the internal resistance of a secondary battery including the compound represented by Formula 1-1 may be reduced, and high-temperature characteristics may be improved.

For example, the phosphate-based additive may include a compound represented by Formula 1-2 below.

[Formula 1-2]

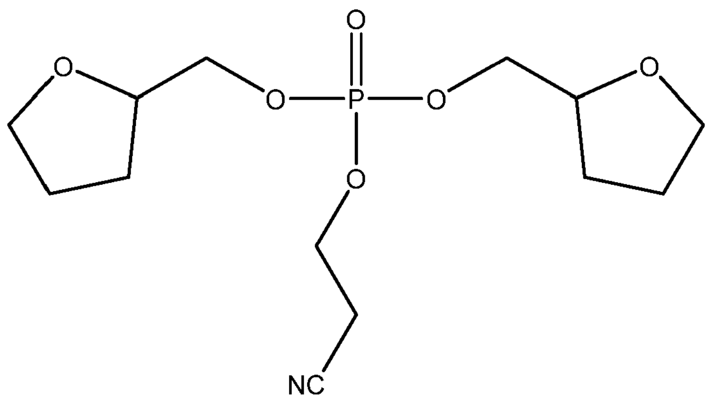

Accordingly, the internal resistance of a secondary battery including the compound represented by Formula 1-2 may be reduced, and the low-temperature characteristics may be improved.

In some embodiments, the phosphate-based additive may include both the compound represented by Formula 1-1 and the compound represented by Formula 1-2. Accordingly, the high-temperature and low-temperature characteristics of the secondary battery including the phosphate-based additive may be improved.

In one embodiment, a weight ratio of the compound represented by Formula 1-2 to the compound represented by Formula 1-1 may be 0.1 to 9, 0.25 to 4, 0.42 to 2.34, 0.5 to 2, or 0.67 to 1.5. Within the above range, the high -temperature and low-temperature characteristics of the secondary battery including the phosphate-based additive may be improved

together.

In some embodiments, a content of the phosphate-based additive may be 0.01 % by weight ("wt%") to 10 wt%, 0.1 wt% to 10 wt%, or 0.1 wt% to 8 wt% based on a total weight of the electrolyte. Within the above range, the phosphate-based additive may form a protective film on the cathode active material or the anode active material to be stabilized. Accordingly, the output characteristics and lifespan characteristics of the secondary battery may be improved.

In one embodiment, the content of the phosphate-based additive may be 0.1 wt% to 5 wt%, 0.1 wt% to 3 wt%, or 0.1 wt% to 2 wt% based on the total weight of the electrolyte. Within the above range, the output characteristics and lifespan characteristics of the secondary battery including the phosphate-based additive may be further improved.

The organic solvent may include an organic compound which has sufficient solubility to the lithium salt and the phosphate-based additive, and does not have reactivity in the lithium secondary battery. The organic solvent may include, for example, at least one of a carbonate solvent, an ester solvent, an ether solvent, a ketone solvent, an alcohol solvent and an aprotic solvent. These may be used alone or in combination of two or more thereof.

The carbonate solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate and the like. The ester solvent may include, for example, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), γ-butyrolactone (GBL), decanolide, valerolactone, mevalonolactone, caprolactone, and the like. The ether organic solvent may include, for example, dibutyl ether, tetraethylene glycol dimethyl ether (TEGDME), diethylene glycol dimethyl ether (DEGDME), dimethoxy ethane, diethoxy ethane, tetrahydrofuran (THF), and 2-methyltetrahydrofuran, and the like.

The ketone solvent may include, for example, cyclohexanone.

The alcohol solvent may include, for example, ethyl alcohol, isopropyl alcohol, and the like.

The aprotic solvent may include, for example, dimethyl sulfoxide, acetonitrile, sulfolane, and propylene sulfite, and the like.

In some embodiments, as the organic solvent, the carbonate solvent may be used. For example, as the organic solvent, at least one of ethylene carbonate (EC), ethyl methyl carbonate (EMC), dimethyl carbonate (DMC), and diethyl carbonate (DEC) may be used. In one embodiment, as the organic solvent, two or more of ethylene carbonate (EC), ethyl methyl carbonate (EMC), dimethyl carbonate (DMC) and diethyl carbonate (DEC) may be used in combination.

The organic solvent may be used as a balance or remainder except for the components included in the electrolyte, which will be described below.

The lithium salt is represented by, for example, $Li^+X^-$, and as an anion (X) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the like may be utilized. These may be used alone or in combination of two or more thereof.

In some embodiments, the lithium salt may include at least one selected from the group consisting of lithium tetrafluoroborate ($LiBF_4$), lithium hexafluorophosphate ($LiPF_6$), and lithium difluorophosphate ($LiPO_2F_2$). Thereby, the transfer of lithium ions may be further accelerated during charging and discharging of the lithium secondary battery. Accordingly, the capacity characteristics of the lithium secondary battery may be further improved.

In one embodiment, the lithium salt may be included in a concentration of 0.01 M to 5 M, 0.01 M to 2 M, or 0.1 M to 2 M based on the organic solvent. Within the above range, the transfer of lithium ions and/or electrons during charging and discharging of the lithium secondary battery may be accelerated, thereby improving the capacity characteristics.

In some embodiments, the electrolyte may further include an auxiliary additive. The auxiliary additives may include, for example, a cyclic carbonate compound, a fluorine-substituted cyclic carbonate compound, a sultone compound, a cyclic sulfate compound, a phosphate compound, and a borate compound. These may be used alone or in combination of two or more thereof.

The cyclic carbonate compound may include vinylene carbonate (VC), vinyl ethylene carbonate (VEC), and the like. The fluorine-substituted cyclic carbonate compound may include fluoroethylene carbonate (FEC), and the like. The sultone compound may include 1,3-propane sultone, 1,3-propene sultone, 1,4-butane sultone, and the like. The cyclic sulfate compound may include 1,2-ethylene sulfate, 1,2-propylene sulfate, and the like. The cyclic sulfite compound may include ethylene sulfite, butylene sulfite, and the like. The phosphate compound may include lithium difluoro bis-oxalato phosphate, lithium difluoro phosphate, and the like. The borate compound may include lithium bis(oxalate) borate, and the like.

In some embodiments, the auxiliary additive may be included in an amount of 0.01 wt% to 5 wt%, 0.05 wt% to 5 wt%, 0.1 wt% to 5 wt%, 0.1 wt% to 3 wt%, or 0.1 wt% to 2 wt%. Within the above content range, the protective film may be formed on the cathode active material or the anode active material together with the above-described phosphate-based additive, and the durability of the protective film may be improved. Accordingly, the lifespan characteristics and capacity characteristics of the secondary battery including the auxiliary additive may be further improved.

FIGS. 1 and 2 are respectively, schematic plan and cross-sectional views of a lithium secondary battery according to embodiments of the present disclosure. FIG. 2 is a cross-sectional view taken on line I-I' in FIG. 1.

Referring to FIGS. 1 and 2, the lithium secondary battery may include a cathode 100 and an anode 130 disposed to face the cathode 100.

The cathode 100 may include a cathode current collector 105 and a cathode active material layer 110 on the cathode current collector 105.

The cathode current collector 105 may include stainless steel, nickel, aluminum, titanium or an alloy thereof. The cathode current collector 105 may also include aluminum or stainless steel subjected to surface treatment with carbon, nickel, titanium or silver. For example, the cathode current collector 105 may have a thickness of 10 to 50 μm, but the thickness is not limited thereto.

The cathode active material layer 110 may include a cathode active material. The cathode active material may include a compound capable of reversibly intercalating and deintercalating lithium ions.

According to various embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 2 below.

[Formula 2] $Li_xNi_aM_bO_{2+z}$

In Formula 2, x, a, b and z may be in a range of $0.9 \le x \le 1.2$, $0.6 \le a \le 0.99$, $0.01 \le b \le 0.4$, $-0.5 \le z \le 0.1$, respectively. As described above, M may include Co, Mn and/or Al.

The chemical structure represented by Formula 2 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 2 is provided to express the bonding relationship between the main active elements, and is a formula encompassing introduction and substitution of the additional elements.

In one embodiment, the inventive material may further include auxiliary elements which are added to the main active elements, thus, to enhance chemical stability of the cathode active material or the layered structure/crystal structure. The auxiliary element may be incorporated into the layered structure/crystal structure together to form a bond, and it should be understood that this case is also included within the chemical structure range represented by Formula 2.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra. P or Zr. The auxiliary element may act as an auxiliary active element which contributes to the capacity/output activity of the cathode active material together with Co or Mn like Al.

For example, the cathode active material or the lithium-nickel metal oxide may include a layered structure or crystal structure represented by Formula 2-1 below.

[Formula 2-1] $Li_xNi_aM1_{b1}M2_{b2}O_{2+z}$

In Formula 2-1, M1 may include Co, Mn and/or Al. M2 may include the above-described auxiliary elements. In Formula 2-1, x, a, b1, b2 and z may be in a range of $0.9 \le x \le 1.2$, $0.6 \le a \le 0.99$, $0.01 \le b1+b2 \le 0.4$, $-0.5 \le z \le 0.1$, respectively.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be included in the bonding structure represented by the Formula 2 or Formula 2-1 above.

The cathode active material may include a nickel-cobalt-manganese (NCM)-based lithium oxide. In this case, an NCM-based lithium oxide with an increased content of nickel may be used.

Ni may be provided as a transition metal related to the output and capacity of the lithium secondary battery. Therefore, as described above, by employing a high-content (High-Ni) composition in the cathode active material, a high-capacity cathode and a high-capacity lithium secondary battery may be provided.

However, as the content of Ni is increased, long-term storage stability and life-span stability of the cathode or the secondary battery may be relatively decreased, and a side reaction with the electrolyte may also be increased. However, according to various embodiments, the life-span stability and capacity retention characteristics may be improved through Mn while maintaining electrical conductivity by including Co. In addition, the above-described phosphate-based additive may stabilize an interface of the cathode active material including a high content of nickel, such that the high-temperature

lifespan characteristics may be improved, and the resistance may be reduced.

A content ofNi (e.g., a mole fraction of nickel based on the total moles of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, or a lithium nickel oxide-based active material.

In some embodiments, the cathode active material may include a lithium iron phosphate (LFP)-based active material represented by Formula 3 below. For example, the LFP active material may be $LiFePO_4$. The LFP active material is structurally more stable than an NCM-based active material, such that high lifespan characteristics and stability may be secured. When the secondary battery using the LFP active material as a cathode active material includes the above-described phosphate-based additive, the lifespan characteristics may be further improved, and the resistance may be further reduced.

[Formula 3] $LiFe_tQ_{1-t}PO_4$

In Formula 3, t may be in a range of $0<t\leq1$, and Q may include at least one of Na, Mg, Ca, Y. Ti, Hf, V, Nb, Ta, Cr, Mo, W, Cu, Ag, Zn, B, Al, Ga, C, Si, Sn, Sr, Ba, Ra, P or Zr.

In some embodiments, the cathode active material may include, for example, a Mn-rich active material, a Li-rich layered oxide (LLO)/over-lithiated oxide (OLO)-based active material, or a Co-less active material, which have a chemical structure or crystal structure represented by Formula 4 below.

[Formula 4] $p[Li_2MnO_3]\cdot(1-p)[LiqJO_2]$

In Formula 4, p and q may be in a range of $0<p<1$, $0.9\leq q\leq1.2$, respectively, and J may include at least one element of Mn, Ni, Co, Fe, Cr, V, Cu, Zn Ti, Al, Mg and B.

For example, the cathode active material may be mixed in a solvent to prepare a cathode slurry. The cathode current collector 105 may be coated with the cathode slurry, followed by drying and pressing the same to prepare the cathode active material layer 110. The coating process may be performed by a method such as gravure coating, slot die coating, simultaneous multilayer die coating, imprinting, doctor blade coating, dip coating, bar coating, or casting, but the coating process is not limited thereto. The cathode active material layer 110 may further include a binder, and optionally may further include a conductive material, a thickener or the like.

As a non-limiting embodiment of the solvent used in the preparation of the cathode active material layer 110, N-methyl-2-pyrrolidone (NMP), dimethylformamide, dimethylacetamide, N,N-dimethylaminopropylamine, ethylene oxide, tetrahydrofuran, and the like may be utilized.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR), and the like. In one embodiment, a PVDF-based binder may be used as the cathode binder.

The conductive material may be added to the cathode active material layer 110 in order to enhance the conductivity thereof and/or the mobility of lithium ions or electrons. For example, the conductive material may include a carbon-based conductive material such as graphite, carbon black, acetylene black, Ketjen black, graphene, carbon nanotubes, vapor-grown carbon fibers (VGCFs), carbon fibers, and/or a metal-based conductive material including tin, tin oxide, titanium oxide, or a perovskite material such as $LaSrCoO_3$, and $LaSrMnO_3$, but the conductive material is not limited thereto

The cathode active material layer 110 may further include a thickener and/or dispersant. In one embodiment, the cathode active material layer 110 may include a thickener such as carboxy methyl cellulose (CMC).

The anode 130 may include an anode current collector 125 and an anode active material layer 120 formed on at least one surface of the anode current collector 125.

As a non-limiting enbodiment of the anode current collector 125, a copper foil, a nickel foil, a stainless steel foil, a titanium foil, a nickel foam, a copper foam, a polymer substrate coated with conductive metal, and the like may be utilized. The anode current collector 125 may have a thickness, for example, of 10 μm to 50 μm, but the thickness is not limited thereto.

The anode active material layer 120 may include an anode active material. As the anode active material, a material capable of intercalating and deintercalating lithium ions may be used. For example, as the anode active material, carbon-based materials such as crystalline carbon, amorphous carbon, a carbon composite, or a carbon fiber, and the like; lithium metal; a lithium alloy; a silicon (Si)-containing material or a tin (Sn)-containing material, and the like may be used.

Examples of the amorphous carbon may include hard carbon, soft carbon, cokes, mesocarbon microbead (MCMB), mesophase pitch-based carbon fiber (MPCF), and the like.

Examples of the crystalline carbon may include graphite-based carbon such as natural graphite, artificial

graphite, graphite cokes, graphite MCMB, graphite MPCF, and the like.

As the lithium metal, pure lithium metal or lithium metal having a protective layer formed thereon for suppressing dendrite growth, and the like. may be utilized. In one embodiment, a lithium metal-containing layer deposited or coated on the anode current collector 125 may be used as the anode active material layer 120. In one embodiment, a lithium thin film layer may also be used as the anode active material layer 120.

As elements included in the lithium alloy, aluminum, zinc, bismuth, cadmium, antimony, silicon, lead, tin, gallium, or indium, and the like may be utilized.

The silicon-containing material may provide increased capacity characteristics. The silicon-containing material may include Si, $SiO_x$ (0<x<2), metal-doped $SiO_x$ (0<x<2), a silicon-carbon composite, and the like. The metal may include lithium and/or magnesium, and the metal-doped $SiO_x$ (0<x<2) may include metal silicate.

For example, the anode active material may be mixed in a solvent to prepare an anode slurry. The anode slurry may be coated/deposited on the anode current collector 125, followed by drying and pressing the same to prepare the anode active material layer 120. The coating process may be performed by a method such as gravure coating, slot die coating, simultaneous multilayer die coating, imprinting, doctor blade coating, dip coating, bar coating, casting, and the like., but the coating process is not limited thereto. The anode active material layer 120 may further include a binder, and optionally may further include a conductive material, a thickener or the like.

In some embodiments, the anode 130 may include the anode active material layer 120 in the form of lithium metal formed through the deposition/coating process.

As a non-limiting embodiment of the solvent for the anode active material layer 120, water, pure water, deionized water, distilled water, ethanol, isopropanol, methanol, acetone, n-propanol, t-butanol, and the like may be utilized.

As the binder, conductive material and thickener for the anode, the above-described materials that can be used in the preparation of the cathode may also be used.

In some embodiments, as the anode binder, a styrene-butadiene rubber (SBR)-based binder, a carboxymethyl cellulose (CMC)-based binder, a polyacrylic acid-based binder, a poly(3,4-ethylenedioxythiophene, PEDOT)-based binder, and the like may be used.

A separation membrane 140 may be interposed between the cathode 100 and the anode 130. The separation membrane 140 may be configured to prevent an electrical short between the cathode and the anode, and to allow a flow of ions to occur. For example, the separation membrane 140 may have a thickness of 10 μm to 20 μm, but, in the present disclosure, the separation membrane is not limited thereto.

For example, the separation membrane 140 may include a porous polymer film or a porous nonwoven fabric. The porous polymer film may include a polyolefin polymer such as an ethylene polymer, a propylene polymer, an ethylene/-butene copolymer, an ethylene/hexene copolymer, and an ethylene/methacrylate copolymer, and the like. The porous nonwoven fabric may include glass fibers having a high melting point, polyethylene terephthalate fibers and the like. The separation membrane 140 may also include a ceramic-based material. For example, inorganic particles may be applied to the polymer film or dispersed within the polymer film to improve heat resistance.

The separation membrane 140 may have a single-layer or multi-layer structure including the above-described polymer film and/or non-woven fabric.

According to some embodiments, the cathode 100, the anode 130, and the separation membrane 140 may be repeatedly disposed to form an electrode assembly 150. In some embodiments, the electrode assembly 150 may have a winding shape, a stacking shape, a z-folding shape, or a stack-folding shape.

The electrode assembly 150 may be housed in a case 160 together with the above-described electrolyte according to the embodiments, thereby defining a lithium secondary battery.

For example, electrode tabs (a cathode tabs and an anode tab) may protrude from the cathode current collector 105 and the anode current collector 125, respectively, and extend to one side of the case 160. The electrode tabs may be fused together with the one side of the case 160 and connected to electrode leads (a cathode lead 107 and an anode lead 127) which extend or are exposed to an outside of the case 160.

For example, as the case 160, a pouch-shaped case, a square case, a cylindrical case, a coin-shaped case, and the like may be used.

## Synthesis of phosphate-based additive

### (1) Synthesis Example 1 (synthesis of Formula 1-1)

9.3 mL (100 mmol) of phosphoryl chloride, 13.6 mL (200 mmol) of ethylene cyanohydrin, and 250 mL of methylene chloride (MC) were added into a round bottom flask to prepare a first mixture, followed by cooling the same to -40°C.

17 mL (210 mmol) of pyridine was slowly added dropwise to the first mixture for 30 minutes while maintaining the temperature at -40 °C, and then the reaction was carried out by stirring the mixture for 1 hour while increasing the

temperature to room temperature (25 °C).

After the reaction was completed, the mixture was washed with distilled water and a saturated sodium chloride aqueous solution to obtain a reaction intermediate.

The obtained reaction intermediate, 9.7 mL (100 mmol) of tetrahydrofurfuryl alcohol, and 200 mL of methylene chloride (MC) were added into the round bottom flask to prepare a second mixture, followed by cooling the same to 0 °C.

14.6 mL (105 mmol) of triethylamine was slowly added dropwise to the second mixture for 30 minutes while maintaining the temperature at 0°C, and then the reaction was carried out by stirring the mixture for 3 hours while increasing the temperature to room temperature (25 °C).

After the reaction was completed, the mixture was washed with distilled water and a saturated sodium chloride aqueous solution, and then the solvent was removed under reduced pressure. Thereafter, the mixture was purified and dried using silica gel column chromatography to obtain 13 g of a colorless liquid product (Formula 1-1).

FIG. 3 is a graph illustrating results measured by 1H-nuclear magnetic resonance (NMR) of a phosphate-based additive according to embodiments of the present disclosure.

Referring to FIG. 3, 1H-NMR results of the phosphate-based additive represented by Formula 1-1 are as follows.

1H-NMR(CDCl3, 500 MHz): 4.32-4.26(m, 4H), 4.154.10(m, 2H), 4.06-4.00(m, 1H), 3.88-3.83(m, 1H), 3.82-3.76(m, 1H), 2.79-2.76(m, 4H), 2.02-1.96(m,1H), 1.94-1.87(m, 2H), 1.65-1.60(m, 1H).

<u>**(2) Synthesis Example 2 (synthesis of Formula 1-2)**</u>

9.3 mL (100 mmol) of phosphoryl chloride, 19.4 mL (200 mmol) of tetrahydrofurfuryl alcohol, and 250 mL of methylene chloride (MC) were added into in a round bottom flask to prepare a first mixture, followed by cooling the same to -40°C.

29 mL (210 mmol) of triethylamine was slowly added dropwise to the first mixture for 30 minutes while maintaining the temperature at -40 °C, and then the reaction was carried out by stirring the mixture for 3 hour while increasing the temperature to room temperature (25 °C).

After the reaction was completed, the mixture was washed with distilled water and a saturated sodium chloride aqueous solution to obtain a reaction intermediate.

The obtained reaction intermediate, 6.8 mL (100 mmol) of ethylene cyanohydrin, and 200 mL of methylene chloride (MC) were added into the round bottom flask to prepare a second mixture, followed by cooling the same to 0 °C.

8.5 mL (105 mmol) of pyridine was slowly added dropwise to the second mixture for 30 minutes while maintaining the temperature at 0°C, and then the reaction was carried out by stirring the mixture for 3 hours while increasing the temperature to room temperature (25 °C).

After the reaction was completed, the mixture was washed with distilled water and a saturated sodium chloride aqueous solution, and then the solvent was removed under reduced pressure. Thereafter, the mixture was purified and dried using silica gel column chromatography to obtain 16 g of a colorless liquid product (Formula 1-2).

FIG. 4 is a graph illustrating results measured by 1H-nuclear magnetic resonance (NMR) of a phosphate-based additive according to embodiments of the present disclosure.

Referring to FIG. 4, 1H-NMR results of the phosphate additive represented by Formula 1-2 are as follows.

1H-NMR(CDCl3, 500 MHz): 4.16-4.07(m, 6H), 3.86-3.80(m, 2H), 3.80-3.72(m, 2H), 3.72-3.70(m, 2H), 2.63(t, 2H), 2.06-1.96(m, 2H), 1.96-1.86(m,4H), 11.69-1.65(m, 2H)

<u>**Examples and Comparative Examples**</u>

<u>**Example 1**</u>

<u>(1) Preparation of electrolyte</u>

A 1.2 M $LiPF_6$ solution (a mixed solvent of EC/EMC in a volume ratio of 25:75) was prepared. 1 wt% of fluoroethylene carbonate (FEC) and 2 wt% of vinylene carbonate (VC) were added into the $LiPF_6$ solution based on a total weight of the electrolyte, and 0.3 wt% of the compound represented by Formula 1-1 was mixed as a phosphate-based additive.

<u>(2) Preparation of LFP ($LiFePO_4$)-based cathode</u>

A slurry was prepared by mixing $LiFePO_4$ as a cathode active material, carbon nanotubes (CNTs) as a conductive material, and polyvinylidene fluoride (PVdF) as a binder in a weight ratio of 97:1:2. The prepared slurry was uniformly applied to an aluminum foil having a thickness of 12 μm, followed by vacuum drying and pressing the same at 130°C to prepare a cathode for a lithium secondary battery.

(3) Manufacturing of lithium secondary battery

An anode slurry was prepared by mixing 95 wt% of an anode active material in which artificial graphite and natural graphite are mixed in a weight ratio of 7:3, 3 wt% of graphite as a conductive material, and 2 wt% of styrene-butadiene rubber (SBR) as a binder and carboxymethyl cellulose (CMC) as a thickener mixed in a weight ratio of 1: 1.
The prepared anode slurry was uniformly applied to a region of a copper foil (thickness 15 μm) having a protrusion part (anode tab) on one side except for a protrusion part, followed by drying and pressing the same to prepare an anode.
The cathode and the anode prepared as described above were cut into a predetermined size and stacked, and a separator (polyethylene, thickness 20 μm) was interposed between the cathode and the anode to form an electrode assembly, and then tab parts of the cathode and the anode were welded, respectively.
The electrode assembly was put into a pouch, followed by sealing three sides of the pouch except for an electrolyte injection side. At this time, a portion having the electrode tab was included in the sealing part. After injecting the electrolyte solution prepared in (1) above through the remaining side except for the sealing part, and the remaining side was also sealed, followed by impregnation for 12 hours or more to manufacture a lithium secondary battery sample.

(4) Preparation of $LiNi_{0.88}Co_{0.06}Mn_{0.06}O_2$ (NCM)-based cathode

A slurry was prepared by mixing and dispersing $LiNi_{0.88}Co_{0.06}Mn_{0.06}O_2$ as a cathode active material, CNTs as a conductive material, and PVdF as a binder in N-methyl-2-pyrrolidone in a weight ratio of 98:1:1. The prepared slurry was uniformly applied to an aluminum foil having a thickness of 12 μm, followed by vacuum drying and pressing the same at 130°C to prepare a cathode for a lithium secondary battery.

**Examples 2 to 11 and Comparative Examples 1 to 4**

Lithium secondary batteries were manufactured according to the same procedures as described in Example 1, except that the type and content of the phosphate-based additive and the type and content of cathode active material were set as shown in Table 1 below, and the cathode was prepared as in (4) above when using $LiNi_{0.88}Co_{0.06}Mn_{0.06}O_2$ as the cathode active material

TABLE 1

| | Electrolyte | | Type and content of cathode active material (wt%) | |
|---|---|---|---|---|
| | Type and content of the phosphate-based additive | Content (wt%) | B | C |
| Example 1 | A1 (Formula 1-1) | 0.3 | 100 | - |
| Example 2 | A2 (Formula 1-2) | 0.3 | 100 | - |
| Example 3 | A1 (Formula 1-1) | 0.3 | - | 100 |
| Example 4 | A2 (Formula 1-2) | 0.3 | - | 100 |
| Example 5 | A1 (Formula 1-1) | 0.05 | 100 | - |
| Example 6 | A1 (Formula 1-1) | 7 | 100 | - |
| Example 7 | A1 (Formula 1-1) | 10 | 100 | - |
| Example 8 | A1 (Formula 1-1) | 15 | 100 | - |
| Example 9 | A1 (Formula 1-1)+A2 (Formula 1-2) (1:1(A1:A2)) | 0.3 | 100 | - |
| Example 10 | A1 (Formula 1-1)+A2 (Formula 1-2) (1:9(A1:A2)) | 0.3 | 100 | - |
| Example 11 | A1 (Formula 1-1)+A2 (Formula 1-2) (9:1(A1:A2)) | 0.3 | 100 | - |
| Comparative Example 1 | - | - | 100 | - |
| Comparative Example 2 | - | - | - | 100 |
| Comparative Example 3 | A3 (Formula 5) | 0.3 | 100 | - |
| Comparative Example 4 | A4 (Formula 6) | 0.3 | 100 | - |

The specific components described in Table 1 are as follows.

A1: The compound represented by Formula 1-1 above
A2: The compound represented by Formula 1-2 above
A3: A compound represented Formula 5 below

[Formula 5]

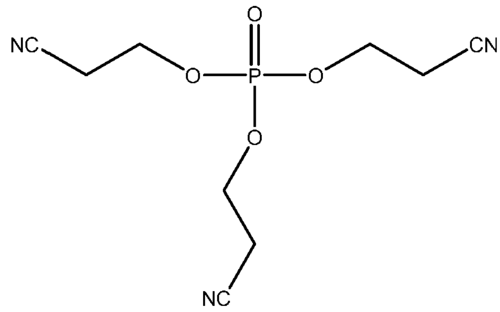

A4: A compound represented by Formula 6 below

[Formula 6]

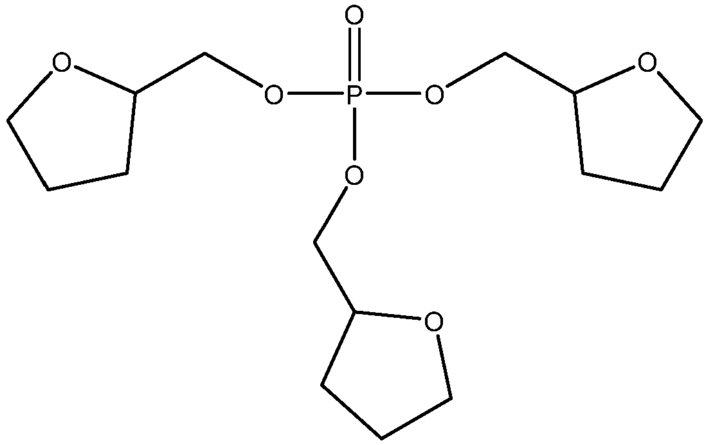

B: $LiFePO_4$
C: $LiNi_{0.88}Co_{0.06}Mn_{0.06}O_2$

**Experimental Example**

**(1) Evaluation of room-temperature characteristic**

1-1) Evaluation of initial discharge capacity

The lithium secondary batteries of the examples and comparative examples were subjected to 0.2 C-rate CC/CV charge (3.65 V, 0.05 C cut-off) at 25 °C, then 0.5 C-rate CC discharge (2.5 V cut-off), and then initial discharge capacities were measured.

1-2) Evaluation of internal resistance (C DCFR and D_DCIR)

For each of the secondary batteries of the examples and comparative examples, at 60% point of state-of-charge (SOC), when sequentially increasing the C-rate to 0.2C, 0.5C, 1.0C, 1.5C, 2.0C, 2.5C and 3.0C, and performing charging and discharging at the corresponding C-rate for 10 seconds, terminal points of the voltage were composed with an equation of a straight line and a slope thereof was adopted as the DCIR.

**(2) Evaluation of low-temperature (-10 °C) performance**

2-1) Evaluation of low-temperature internal resistance (C_DCIR and D DCIR)

The lithium secondary batteries of the examples and comparative examples were left in a chamber at - 10 °C for 4 hours, and then low-temperature internal resistances (C_DCIR and D_DCIR) were measured in the same manner as 1-2) above.

2-2) Evaluation of low-temperature discharge capacity

The lithium secondary batteries of the examples and comparative examples were subjected to 0.5 C-rate CC/CV charge (3.65 V 0.05 C CUT-OFF) in a chamber at -10 °C, then 0.5 C-rate CC discharge (2.5 V cut-off), and then low-temperature discharge capacities were measured.

2-3) Evaluation of low-temperature capacity retention rate (Ret)

The low-temperature capacity retention rate was calculated by converting the discharge capacity measured in 2-2) into a percentage compared to the initial discharge capacity measured in 1-1) according to the following equation.

Low-temperature capacity retention rate (%) = (Low-temperature discharge capacity/Initial discharge capacity) × 100

(3) Evaluation of high-temperature (60 °C) storage characteristic

3-1) Evaluation of battery thickness after high-temperature storage

The lithium secondary batteries of the examples and comparative examples charged as in 1-1) were stored in a constant temperature and humidity chamber at 60 °C for 8 weeks, and then thicknesses of the batteries were measured using a plate thickness measuring device (Mitutoyo, 543-490B).

The thickness increase rate was calculated by converting the thickness of the battery measured after storage at 60°C into a percentage compared to the thickness of the battery measured before storage at 60°C according to the following equation.

Thickness increase rate (%) = (Battery thickness measured after storage/Battery thickness measured before storage) × 100

3-2) Evaluation of high-temperature internal resistance increase rate after high-temperature storage

For the lithium secondary batteries of the examples and comparative examples stored at a high temperature as described in 1-2) above, high-temperature internal resistances (D _DCIR) were measured.

The high-temperature internal resistance increase rate was calculated by converting the measured high-temperature internal resistance (DCIR) into a percentage compared to the internal resistance (D _DCIR) measured in 1-2) according to the following equation.

High-temperature internal resistance increase rate (%) = (High-temperature internal resistance (D_DCIR)/Internal resistance (D _DCIR) × 100

3-3) Evaluation of high-temperature storage capacity retention rate (Ret) after high-temperature storage

The lithium secondary batteries of the examples and comparative examples stored at high temperatures as described above were subjected to 0.5 C-rate CC discharge (2.5 V cut-off), and then discharge capacities after high-temperature storage were measured.

The high-temperature storage capacity retention rate was calculated by converting the discharge capacity after high-temperature storage into a percentage compared to the initial discharge capacity measured in 1-1) according to the following equation.

High-temperature storage capacity retention rate (%) = (Discharge capacity after high-temperature storage/Initial discharge capacity) × 100

3-4) Evaluation of high-temperature storage capacity recovery rate (Rec) after high-temperature storage

For the secondary batteries of the examples and comparative examples, capacity retention rates according to 2-3) above were measured, and then discharge capacities were measured by performing 0.5 C-rate CC/CV charge (3.65 V, 0.05 C cut-off) and 0.5 C-rate CC discharge (2.5 V cut-off).

The high-temperature storage capacity recovery rate was calculated by converting the discharge capacity after the capacity retention rate measurement into a percentage compared to the initial discharge capacity measured in 1-1) according to the following equation.

High-temperature storage capacity recovery rate (%) = (Discharge capacity after capacity retention rate measurement/Initial discharge capacity) $\times$ 100

**(4) Evaluation of high-temperature (45 °C) characteristic**

4-1) Evaluation of high-temperature discharge capacity

The lithium secondary batteries of the examples and comparative examples were subjected to 1 C-rate CC/CV charge (3.65 V 0.05 C cut-off) at 45 °C, then 1C-rate CC discharge(2.5V cut-off), and then initial high-temperature discharge capacities were measured.

After performing the charge and discharge 600 times, high-temperature discharge capacities of the batteries were measured.

4-2) Evaluation of high-temperature capacity retention rate (Ret)

The high-temperature capacity retention rate was calculated by converting the high-temperature discharge capacity into a percentage compared to the initial high-temperature discharge capacity measured in 4-1) according to the following equation.

High-temperature capacity retention rate (%) = (High-temperature discharge capacity/Initial high-temperature discharge capacity) $\times$ 100

Evaluation results are shown in Tables 2 and 3 below.

TABLE 2

| Item | Evaluation of room -temperature characteristic | | | Evaluation of low-temperature (-10 °C) performance | | | |
|---|---|---|---|---|---|---|---|
| | Initial discharge capacity (mAh/g) | C_DCIR (mΩ) | D_DCIR (mΩ) | C_DCIR (mΩ) | D_DCIR (mΩ) | Discharge capacity (mAh/g) | Ret. (%) |
| Example 1 | 1,093 | 56.5 | 46.6 | 234.8 | 158.8 | 482 | 44.1 |
| Example 2 | 1,099 | 64.6 | 54.6 | 249.5 | 159.7 | 481 | 43.8 |
| Example 3 | 1,085 | 29.8 | 27.1 | 131.5 | 111.7 | 795 | 73.2 |
| Example 4 | 1,089 | 31.8 | 30.2 | 142.7 | 112.1 | 760 | 70.5 |
| Example 5 | 1,091 | 66.3 | 61.3 | 251.6 | 162.5 | 465 | 42.5 |
| Example 6 | 1,090 | 68.2 | 62.7 | 250.3 | 161.9 | 470 | 43.1 |
| Example 7 | 1,087 | 70.9 | 66.9 | 265.4 | 164.8 | 466 | 42.9 |
| Example 8 | 1,079 | 71.1 | 68.5 | 271.7 | 167.1 | 452 | 41.9 |
| Example 9 | 1,104 | 51.0 | 40.6 | 227.5 | 152.6 | 517 | 46.8 |
| Example 10 | 1,101 | 56.1 | 44.7 | 234.8 | 156.9 | 484 | 44.1 |
| Example 11 | 1,101 | 53.2 | 43.1 | 229.7 | 155.8 | 485 | 43.9 |
| Comparative Example 1 | 1,072 | 78.8 | 76.2 | 286.9 | 180.3 | 440 | 41.0 |

(continued)

| Item | Evaluation of room -temperature characteristic | | | Evaluation of low-temperature (-10 °C) performance | | | |
|---|---|---|---|---|---|---|---|
| | Initial discharge capacity (mAh/g) | C_DCIR (mΩ) | D_DCIR (mΩ) | C_DCIR (mΩ) | D_DCIR (mΩ) | Discharge capacity (mAh/g) | Ret. (%) |
| Comparative Example 2 | 1,072 | 35.3 | 37.3 | 152.6 | 138.7 | 690 | 64.4 |
| Comparative Example 3 | 1,070 | 80.3 | 75.8 | 286.9 | 178.3 | 432 | 40.4 |
| Comparative Example 4 | 1,069 | 78.7 | 77.3 | 292.1 | 176.0 | 446 | 41.7 |

Referring to Table 2, in the examples which included the phosphate-based additive including the compound represented by Formula 1, the room-temperature initial discharge capacity was 1,079 mAh/g or more, and the room-temperature resistance (C_DCIR) and the room-temperature resistance (D _DCIR) were 71.1 mΩ or less and 68.5 mΩ or less, respectively. In addition, the low-temperature resistance (C_DCIR) and the low-temperature resistance (D _DCIR) were 271.7 mΩ or less and 167.1 mΩ or less, respectively, and the low-temperature capacity retention rate was 41.9% or more.

In Examples 3 and 4 using the NCM-based cathode active material as the cathode active material, the initial capacity was slightly decreased, but the room-temperature and low-temperature resistances (C_DCIR and D_DCIR) were decreased, and the capacity retention rate was increased.

In Example 5 in which the content of additive in the electrolyte was reduced compared to Example 1, and in Examples 6 to 8 in which the content of additive in the electrolyte was increased compared to Example 1, the room-temperature and low-temperature resistances (C_DCIR and D_DCIR) were slightly increased, and the capacity retention rate was slightly decreased.

In Examples 9 to 11 using the compound represented by Formula 1-1 and the compound represented by Formula 1-2 together as the additive in the electrolyte, the room temperature and low-temperature resistances (C_DCIR and D_DCIR) slightly decreased while the capacity retention rate was slightly increased.

In Examples 10 and 11 in which the compound represented by Formula 1-1 and the compound represented by Formula 1-2 were used together as the additive in the electrolyte, but the weight ratio of the compound represented by Formula 1-2 to the compound represented by Formula 1-1 was less than 0.25 or greater than 4, the room temperature and low-temperature resistances (C_DCIR and D_DCIR) were slightly increased compared to Example 9, and the capacity retention rate was slightly decreased.

In comparative examples in which the electrolyte did not include the phosphate-based additive, the room-temperature initial discharge capacity was decreased, the room temperature and low-temperature resistance (C_DCIR and D_DCIR) were increased, and the capacity retention rate was decreased compared to the examples in which other conditions were set to be the same.

In Comparative Examples 3 and 4 using the compound represented by Formula 5 and the compound represented by Formula 6 as the additive, the room-temperature initial discharge capacity was decreased, the room temperature and low-temperature resistances (C_DCIR and D_DCIR) were increased, and the capacity retention rate was decreased.

TABLE 3

| Item | Evaluation of high-temperature (60 °C) storage characteristic | | | | Evaluation of high-temperature (45 °C) characteristic | |
|---|---|---|---|---|---|---|
| | Thickness increase rate (%) | High-temperature resistance increase rate (%) | Ret. (%) | Rec. (%) | Discharge capacity (mAh/g) | Ret. (%) |
| Example 1 | 97 | 141.1 | 88.7 | 84.9 | 1,024 | 88.6 |
| Example 2 | 97 | 134.2 | 85.0 | 84.2 | 1,017 | 87.7 |
| Example 3 | 115 | 110.3 | 82.3 | 81.6 | 923 | 84.7 |
| Example 4 | 120 | 105.7 | 82.0 | 80.7 | 921 | 84.6 |

(continued)

| Item | Evaluation of high-temperature (60 °C) storage characteristic | | | | Evaluation of high-temperature (45 °C) characteristic | |
|---|---|---|---|---|---|---|
| | Thickness increase rate (%) | High-temperature resistance increase rate (%) | Ret. (%) | Rec. (%) | Discharge capacity (mAh/g) | Ret. (%) |
| Example 5 | 100 | 146.2 | 81.8 | 81.6 | 931 | 85.3 |
| Example 6 | 99 | 148.9 | 84.0 | 83.9 | 940 | 85.8 |
| Example 7 | 98 | 152.7 | 83.7 | 82.4 | 906 | 83.4 |
| Example 8 | 100 | 152.6 | 82.5 | 81.9 | 893 | 82.9 |
| Example 9 | 95 | 130.2 | 89.6 | 87.7 | 1,032 | 89.2 |
| Example 10 | 96 | 132.7 | 89.0 | 85.4 | 1,024 | 88.6 |
| Example 11 | 96 | 133.3 | 89.1 | 85.7 | 1,027 | 88.7 |
| Comparative Example 1 | 100 | 159.0 | 78.2 | 76.7 | 870 | 80.9 |
| Comparative Example 2 | 134 | 121.2 | 81.2 | 80.0 | 858 | 82.0 |
| Comparative Example 3 | 101 | 155.7 | 79.7 | 78.6 | 874 | 81.6 |
| Comparative Example 4 | 100 | 161.6 | 79.8 | 78.3 | 849 | 79.5 |

Referring to Table 3, in the examples which include the phosphate-based additive including the compound represented by Formula 1, the high-temperature resistance increase rate was 152.7% or less, the high-temperature storage capacity retention rate was 81.8% or more, and the high-temperature storage capacity recovery rate was 80.7% or more. In addition, the high-temperature capacity retention rate was 82.9% or more.

In Examples 3 and 4 using the NCM-based cathode active material as the cathode active material, the high-temperature resistance increase rate was slightly reduced, but the high-temperature storage capacity retention rate, high-temperature storage capacity recovery rate and high-temperature capacity retention rate were also slightly reduced.

In Example 5 in which the content of the additive in the electrolyte was reduced compared to Example 1, and in Examples 6 to 8 in which the content of the additive in the electrolyte was increased compared to Example 1, the high-temperature resistance increase rate was slightly increased, and the high-temperature storage capacity retention rate, high-temperature storage capacity recovery rate and high-temperature capacity retention rate were slightly decreased.

In Examples 9 to 11 in which the compound represented by Formula 1-1 and the compound represented by Formula 1-2 were used together as the additive in the electrolyte, the high-temperature resistance increase rate was slightly decreased, while the high-temperature storage capacity retention rate, high-temperature storage capacity recovery rate and high-temperature capacity retention rate were slightly increased.

In Examples 10 and 11 in which the compound represented by Formula 1-1 and the compound represented by Formula 1-2 were used together as the additive in the electrolyte, and the weight ratio of the compound represented by Formula 1-2 to the compound represented by Formula 1-1 was less than 0.25 or greater than 4, the high-temperature resistance increase rate was slightly increased compared to Example 9, while the high-temperature storage capacity retention rate, high-temperature storage capacity recovery rate and high-temperature capacity retention rate were slightly decreased.

In comparative examples in which the phosphate-based additive was not included in the electrolyte, the high-temperature resistance retention rate was increased, and the high-temperature storage capacity retention rate, high-temperature storage capacity recovery rate and high-temperature capacity retention rate were decreased compared to examples in which other conditions were set to be the same.

In Comparative Examples 3 and 4 using the compound represented by Formula 5 and the compound represented by Formula 6 as the additive, the high-temperature resistance retention rate was increased, and the high-temperature storage capacity retention rate, high-temperature storage capacity recovery rate and high-temperature capacity retention rate were decreased.

## Claims

1. An electrolyte for a lithium secondary battery comprising:

    an organic solvent;
    a lithium salt; and
    a phosphate-based additive which comprises a compound represented by Formula 1 below:

[Formula 1]

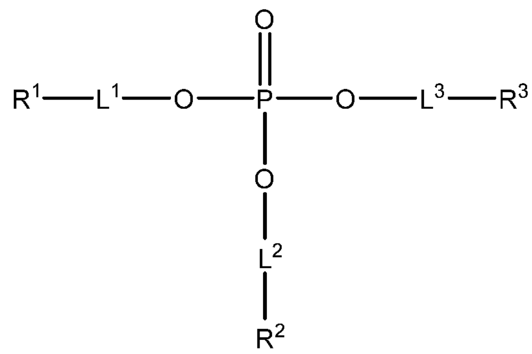

wherein in Formula 1, $L^1$, $L^2$ and $L^3$ are each independently an alkylene group having 1 to 8 carbon atoms, and $R^1$ is a heterocycloalkyl group having 2 to 8 carbon atoms, $R^2$ is a cyano group, and $R^3$ is a heterocycloalkyl group having 2 to 8 carbon atoms or a cyano group).

2. The electrolyte for a lithium secondary battery according to claim 1, wherein in Formula 1, $R^1$ is a heterocycloalkyl group having 2 to 8 carbon atoms, which includes oxygen.

3. The electrolyte for a lithium secondary battery according to claim 2, wherein in Formula 1, $R^1$ is a tetrahydrofuran group.

4. The electrolyte for a lithium secondary battery according to any one of claims 1-3, wherein in Formula 1, $R^1$ and $R^3$ are the same as each other, and $R^1$ and $R^3$ are heterocycloalkyl groups.

5. The electrolyte for a lithium secondary battery according to any one of claims 1-3, wherein in Formula 1, $R^2$ and $R^3$ are the same as each other, and $R^2$ and $R^3$ are cyano groups.

6. The electrolyte for a lithium secondary battery according to any one of claims 1-3, wherein the phosphate-based additive comprises at least one of a compound represented by Formula 1-1 below and a compound represented by Formula 1-2 below:

[Formula 1-1]

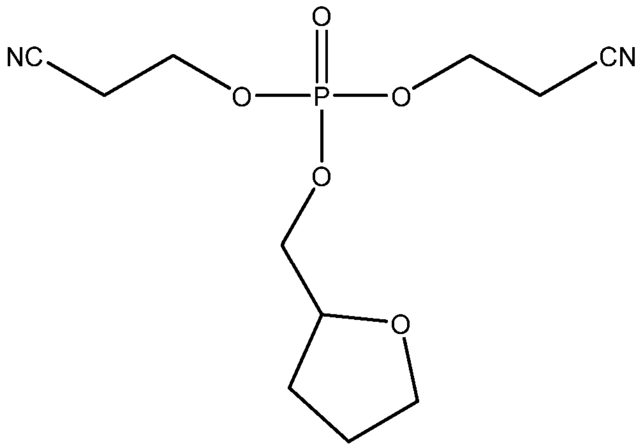

[Formula 1-2]

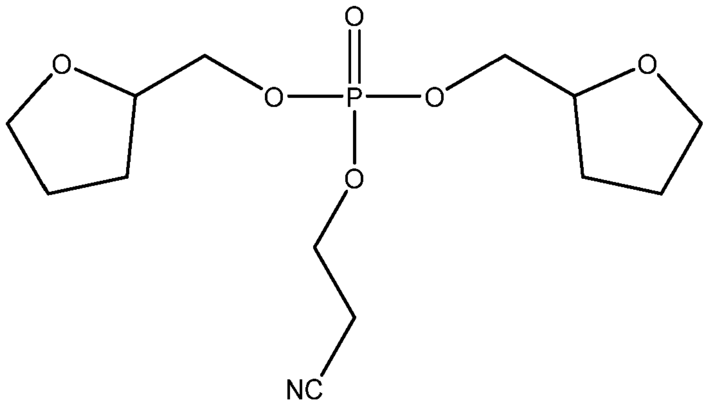

**7.** The electrolyte for a lithium secondary battery according to claim 6, wherein the phosphate-based additive comprises a compound represented by Formula 1-1 and a compound represented by Formula 1-2.

**8.** The electrolyte for a lithium secondary battery according to claim 7, wherein a weight ratio of the compound represented by Formula 1-2 to the compound represented by Formula 1-1 is 0.1 to 9, preferably 0.25 to 4.

**9.** The electrolyte for a lithium secondary battery according to any one of claims 1-8, wherein the phosphate-based additive is included in an amount of 0.01% by weight to 10% by weight based, preferably 0.1% by weight to 8% by weight, on a total weight of the electrolyte.

**10.** The electrolyte for a lithium secondary battery according to any one of claims 1-9, wherein the electrolyte further comprises at least one auxiliary additive selected from the group consisting of a cyclic carbonate compound, a fluorine-substituted cyclic carbonate compound, a sultone compound, a cyclic sulfate compound, a phosphate compound and a borate compound.

**11.** The electrolyte for a lithium secondary battery according to claim 10, wherein the auxiliary additive is included in an amount of 0.01% by weight to 5% by weight, preferably 0.1% by weight to 5% by weight, based on the total weight of the electrolyte.

**12.** The electrolyte for a lithium secondary battery according to any one of claims 1-11, wherein the organic solvent comprises at least one selected from the group consisting of a carbonate solvent, an ester solvent, a ketone solvent, an alcohol solvent and an aprotic solvent.

**13.** The electrolyte for a lithium secondary battery according to any one of claims 1-12, wherein the lithium salt comprises

at least one selected from the group consisting of lithium tetrafluoroborate ($LiBF_4$), lithium hexafluorophosphate ($LiPF_6$) and lithium difluorophosphate ($LiPO_2F_2$).

**14.** A lithium secondary battery comprising:

a cathode(100);
an anode(130) disposed to face the cathode(100); and
the electrolyte for a lithium secondary battery according to any one of claims 1-13.

**15.** The lithium secondary battery according to claim 14, wherein the cathode(100) comprises lithium iron phosphate ($LiFePO_4$, LFP) or a lithium-nickel metal oxide.

**Patentansprüche**

**1.** Elektrolyt für eine Lithium-Sekundärbatterie, umfassend:

ein organisches Lösungsmittel;
ein Lithiumsalz; und
ein Additiv auf Phosphatbasis, das eine durch die nachstehende Formel 1 dargestellte Verbindung umfasst:

[Formel 1]

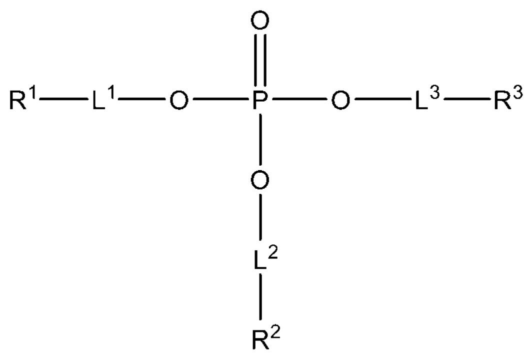

wobei in Formel 1 $L^1$, $L^2$ und $L^3$ jeweils unabhängig eine Alkylengruppe mit 1 bis 8 Kohlenstoffatomen sind, und $R^1$ eine Heterocycloalkylgruppe mit 2 bis 8 Kohlenstoffatomen ist, $R^2$ eine Cyanogruppe ist und $R^3$ eine Heterocycloalkylgruppe mit 2 bis 8 Kohlenstoffatomen oder eine Cyanogruppe ist).

**2.** Elektrolyt für eine Lithium-Sekundärbatterie nach Anspruch 1, wobei in Formel 1 $R^1$ eine Heterocycloalkylgruppe mit 2 bis 8 Kohlenstoffatomen ist, die Sauerstoff enthält.

**3.** Elektrolyt für eine Lithium-Sekundärbatterie nach Anspruch 2, wobei in Formel 1 $R^1$ eine Tetrahydrofurangruppe ist.

**4.** Elektrolyt für eine Lithium-Sekundärbatterie nach einem der Ansprüche 1-3, wobei in Formel 1 $R^1$ und $R^3$ gleich sind und $R^1$ und $R^3$ Heterocycloalkylgruppen sind.

**5.** Elektrolyt für eine Lithium-Sekundärbatterie nach einem der Ansprüche 1-3, wobei in Formel 1 $R^2$ und $R^3$ gleich sind und $R^2$ und $R^3$ Cyanogruppen sind.

**6.** Elektrolyt für eine Lithium-Sekundärbatterie nach einem der Ansprüche 1-3, wobei das Additiv auf Phosphatbasis mindestens eine von einer durch die nachstehende Formel 1-1 dargestellten Verbindung und einer durch die nachstehende Formel 1-2 dargestellten Verbindung umfasst:

[Formel 1-1]

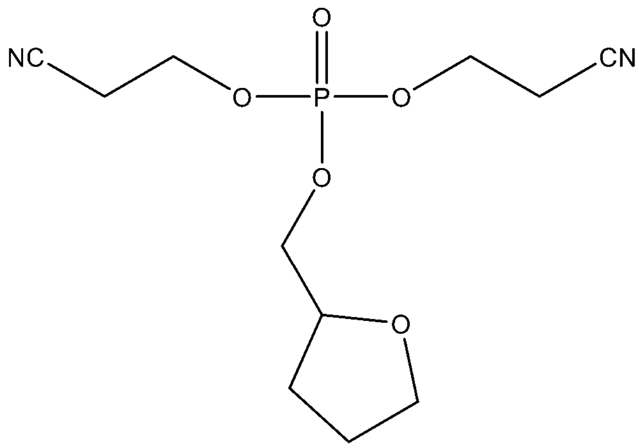

[Formel 1-2]

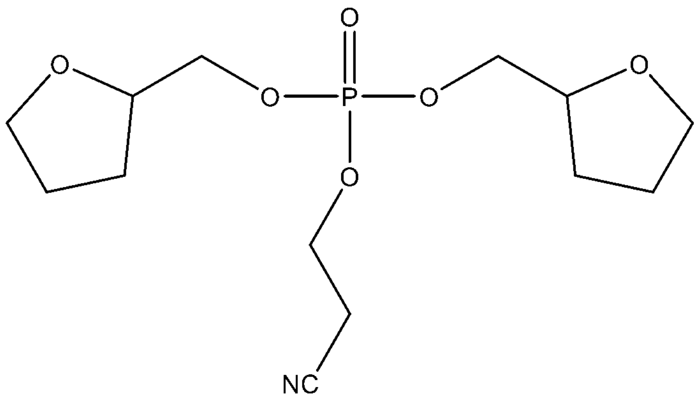

7. Elektrolyt für eine Lithium-Sekundärbatterie nach Anspruch 6, wobei das Additiv auf Phosphatbasis eine durch die Formel 1-1 dargestellte Verbindung und eine durch die Formel 1-2 dargestellte Verbindung umfasst.

8. Elektrolyt für eine Lithium-Sekundärbatterie nach Anspruch 7, wobei ein Gewichtsverhältnis der durch die Formel 1-2 dargestellten Verbindung zu der durch die Formel 1-1 dargestellten Verbindung 0,1 bis 9, vorzugsweise 0,25 bis 4, beträgt.

9. Elektrolyt für eine Lithium-Sekundärbatterie nach einem der Ansprüche 1-8, wobei das Additiv auf Phosphatbasis in einer Menge von 0,01 Gew.-% bis 10 Gew.-%, vorzugsweise 0,1 Gew.-% bis 8 Gew.-%, bezogen auf ein Gesamtgewicht des Elektrolyten, enthalten ist.

10. Elektrolyt für eine Lithium-Sekundärbatterie nach einem der Ansprüche 1-9, wobei der Elektrolyt ferner mindestens ein Hilfsadditiv umfasst, das aus der Gruppe ausgewählt ist, die aus einer cyclischen Carbonatverbindung, einer fluorsubstituierten cyclischen Carbonatverbindung, einer Sultonverbindung, einer cyclischen Sulfatverbindung, einer Phosphatverbindung und einer Boratverbindung besteht.

11. Elektrolyt für eine Lithium-Sekundärbatterie nach Anspruch 10, wobei das Hilfsadditiv in einer Menge von 0,01 Gew.-% bis 5 Gew.-%, vorzugsweise 0,1 Gew.-% bis 5 Gew.-%, bezogen auf das Gesamtgewicht des Elektrolyten, enthalten ist.

12. Elektrolyt für eine Lithium-Sekundärbatterie nach einem der Ansprüche 1-11, wobei das organische Lösungsmittel mindestens eines umfasst, das aus der Gruppe ausgewählt ist, die aus einem Carbonatlösungsmittel, einem Esterlösungsmittel, einem Ketonlösungsmittel, einem Alkohollösungsmittel und einem aprotischen Lösungsmittel besteht.

**13.** Elektrolyt für eine Lithium-Sekundärbatterie nach einem der Ansprüche 1-12, wobei das Lithiumsalz mindestens eines umfasst, das aus der Gruppe ausgewählt ist, die aus Lithiumtetrafluorborat ($LiBF_4$), Lithiumhexafluorphosphat ($LiPF_6$) und Lithiumdifluorphosphat ($LiPO_2F_2$) besteht.

**14.** Lithium-Sekundärbatterie, umfassend:

eine Kathode (100);
eine Anode (130), die so angeordnet ist, dass sie der Kathode (100) zugewandt ist; und
den Elektrolyt für eine Lithium-Sekundärbatterie nach einem der Ansprüche 1-13.

**15.** Lithium-Sekundärbatterie nach Anspruch 14, wobei die Kathode (100) Lithiumeisenphosphat ($LiFePO_4$, LFP) oder ein Lithium-Nickel-Metalloxid umfasst.

**Revendications**

**1.** Électrolyte pour une batterie secondaire au lithium, comprenant :

un solvant organique ;
un sel de lithium ; et
un additif à base de phosphate comprenant un composé représenté par la formule 1 ci-dessous :

[Formule 1]

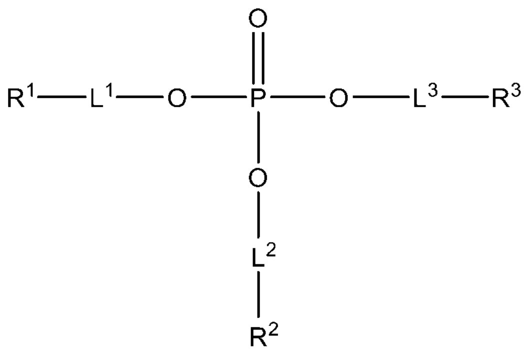

dans laquelle, dans la formule 1, $L^1$, $L^2$et $L^3$représentent chacun indépendamment un groupe alkylène comportant 1 à 8 atomes de carbone, et
$R^1$ est un groupe hétérocycloalkyle ayant de 2 à 8 atomes de carbone, $R^2$ est un groupe cyano et $R^3$ est un groupe hétérocycloalkyle ayant de 2 à 8 atomes de carbone ou un groupe cyano).

**2.** Électrolyte pour une batterie secondaire au lithium selon la revendication 1, dans lequel, dans la formule 1, $R^1$ est un groupe hétérocycloalkyle comportant de 2 à 8 atomes de carbone et contenant de l'oxygène.

**3.** Électrolyte pour une batterie secondaire au lithium selon la revendication 2, dans lequel, dans la formule 1, $R^1$est un groupe tétrahydrofurane.

**4.** Électrolyte pour une batterie secondaire au lithium selon l'une des revendications 1 à 3, dans lequel, dans la formule 1, $R^1$ et $R^3$ sont identiques et $R^1$ et $R^3$ sont des groupes hétérocycloalkyle.

**5.** Électrolyte pour une batterie secondaire au lithium selon l'une des revendications 1 à 3, dans lequel, dans la formule 1, $R^2$et $R^3$sont identiques et $R^2$et $R^3$sont des groupes cyano.

**6.** Électrolyte pour une batterie secondaire au lithium selon l'une des revendications 1 à 3, dans lequel l'additif à base de phosphate comprend au moins un composé choisi parmi un composé représenté par la formule 1-1 ci-dessous et un composé représenté par la formule 1-2 ci-dessous :

[Formule 1-1]

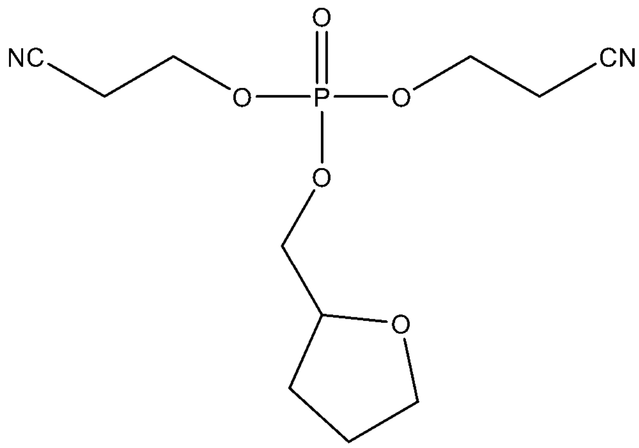

[Formule 1-2]

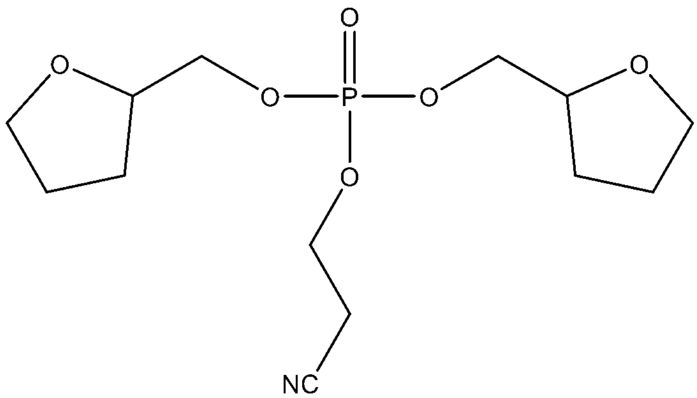

7. Électrolyte pour une batterie secondaire au lithium selon la revendication 6, dans lequel l'additif à base de phosphate comprend un composé représenté par la formule 1-1 et un composé représenté par la formule 1-2.

8. Électrolyte pour une batterie secondaire au lithium selon la revendication 7, dans lequel le rapport pondéral entre le composé représenté par la formule 1-2 et le composé représenté par la formule 1-1 est compris entre 0,1 et 9, de préférence entre 0,25 et 4.

9. Électrolyte pour une batterie secondaire au lithium selon l'une des revendications 1 à 8, dans lequel l'additif à base de phosphate est présent en une quantité de 0,01 % en poids à 10 % en poids, de préférence de 0,1 % en poids à 8 % en poids, par rapport au poids total de l'électrolyte.

10. Électrolyte pour une batterie secondaire au lithium selon l'une des revendications 1 à 9, dans lequel l'électrolyte comprend en outre au moins un additif auxiliaire choisi dans le groupe constitué d'un composé carbonate cyclique, d'un composé carbonate cyclique fluoré, d'un composé sultone, d'un composé sulfate cyclique, d'un composé phosphate et d'un composé borate.

11. Électrolyte pour une batterie secondaire au lithium selon la revendication 10, dans lequel l'additif auxiliaire est présent en une quantité comprise entre 0,01 % et 5 % en poids, de préférence entre 0,1 % et 5 % en poids, par rapport au poids total de l'électrolyte.

12. Électrolyte pour une batterie secondaire au lithium selon l'une des revendications 1 à 11, dans lequel le solvant organique comprend au moins un élément choisi dans le groupe constitué d'un solvant carbonate, d'un solvant ester, d'un solvant cétone, d'un solvant alcool et d'un solvant aprotique.

**13.** Électrolyte pour une batterie secondaire au lithium selon l'une des revendications 1 à 12, dans lequel le sel de lithium comprend au moins un composé choisi dans le groupe constitué par le tétrafluoroborate de lithium ($LiBF_4$), l'hexafluorophosphate de lithium ($LiPF_6$ ) et le difluorophosphate de lithium ($LiPO_2$ $F_2$).

**14.** Batterie secondaire au lithium comprenant :

une cathode (100) ;
une anode (130) disposée de manière à faire face à la cathode (100) ; et
l'électrolyte pour une batterie secondaire au lithium selon l'une des revendications 1 à 13.

**15.** Batterie secondaire au lithium selon la revendication 14, dans laquelle la cathode (100) comprend du phosphate de fer et de lithium ($_{LiFePO4}$, LFP) ou un oxyde métallique de lithium et de nickel.

FIG. 1

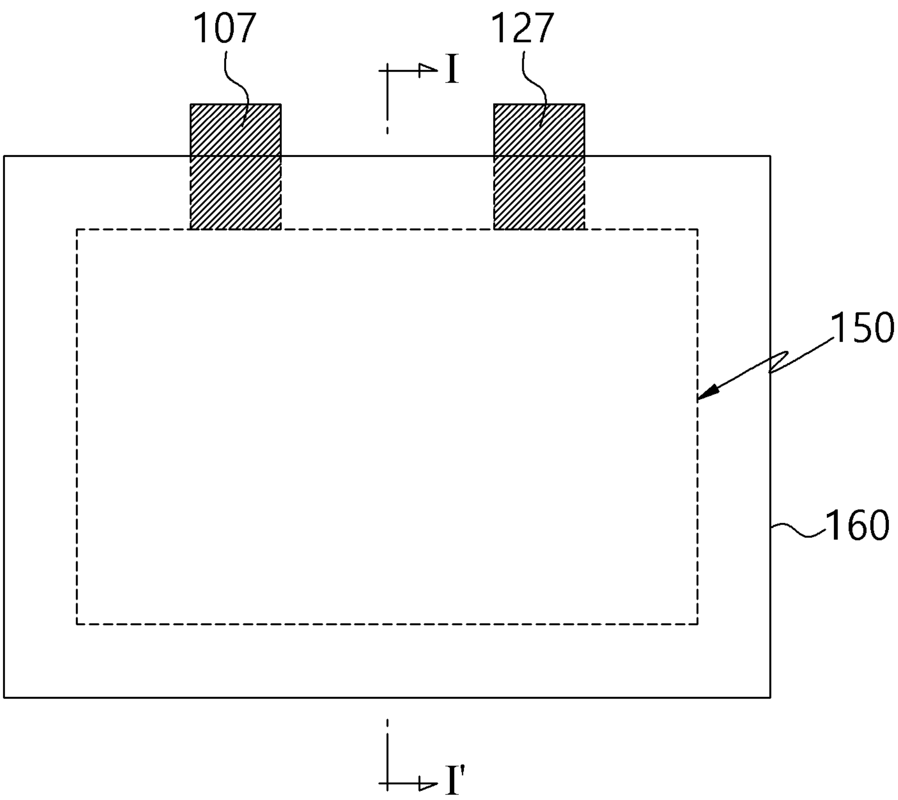


FIG. 2

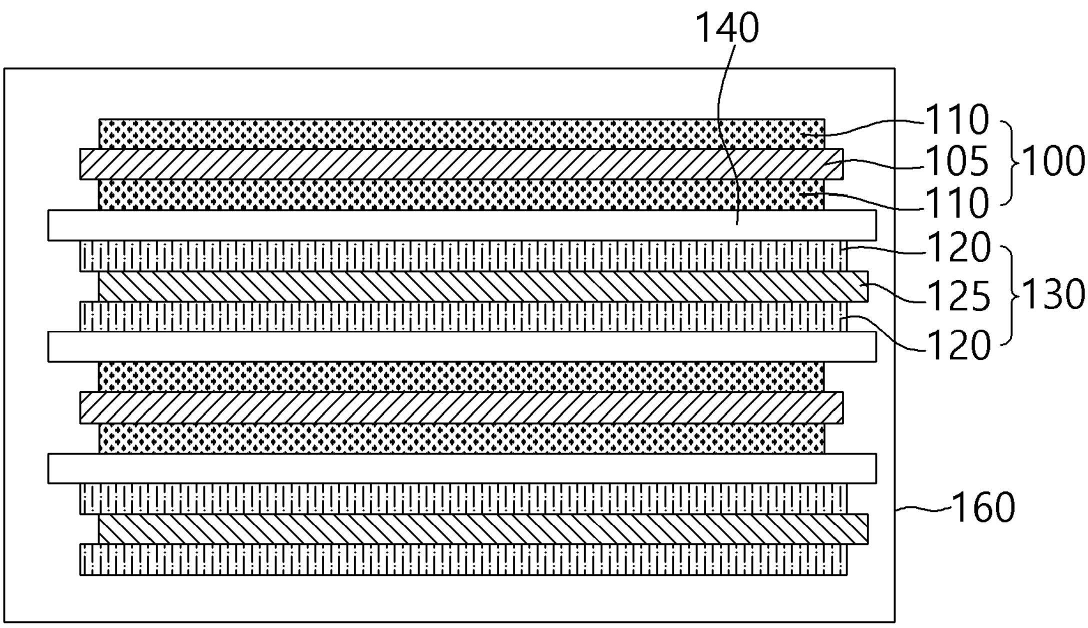

FIG. 3

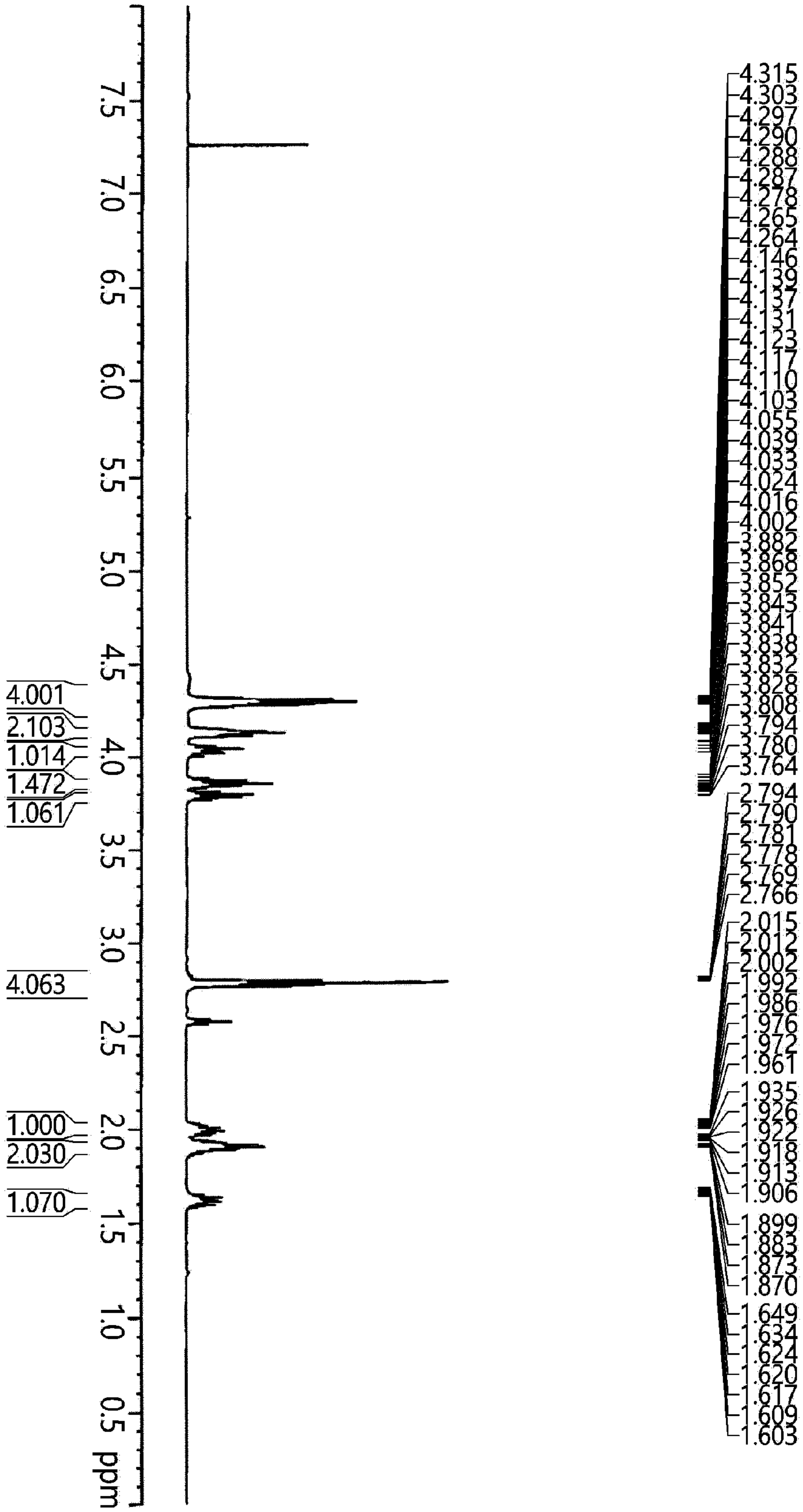
7.5
7.0
6.5
6.0
5.5
5.0
4.5
4.0
3.5
3.0
2.5
2.0
1.5
1.0
0.5 ppm
4.001
2.103
1.014
1.472
1.061
4.063
1.000
2.030
1.070
4.315
4.303
4.297
4.290
4.288
4.287
4.278
4.265
4.264
4.146
4.139
4.137
4.131
4.123
4.117
4.110
4.103
4.055
4.039
4.033
4.024
4.016
4.002
3.882
3.868
3.852
3.843
3.841
3.838
3.832
3.828
3.808
3.794
3.780
3.764
2.794
2.790
2.781
2.778
2.769
2.766
2.015
2.012
2.002
1.992
1.986
1.976
1.972
1.961
1.935
1.926
1.922
1.918
1.913
1.906
1.899
1.883
1.873
1.870
1.649
1.634
1.624
1.620
1.617
1.609
1.603

FIG. 4

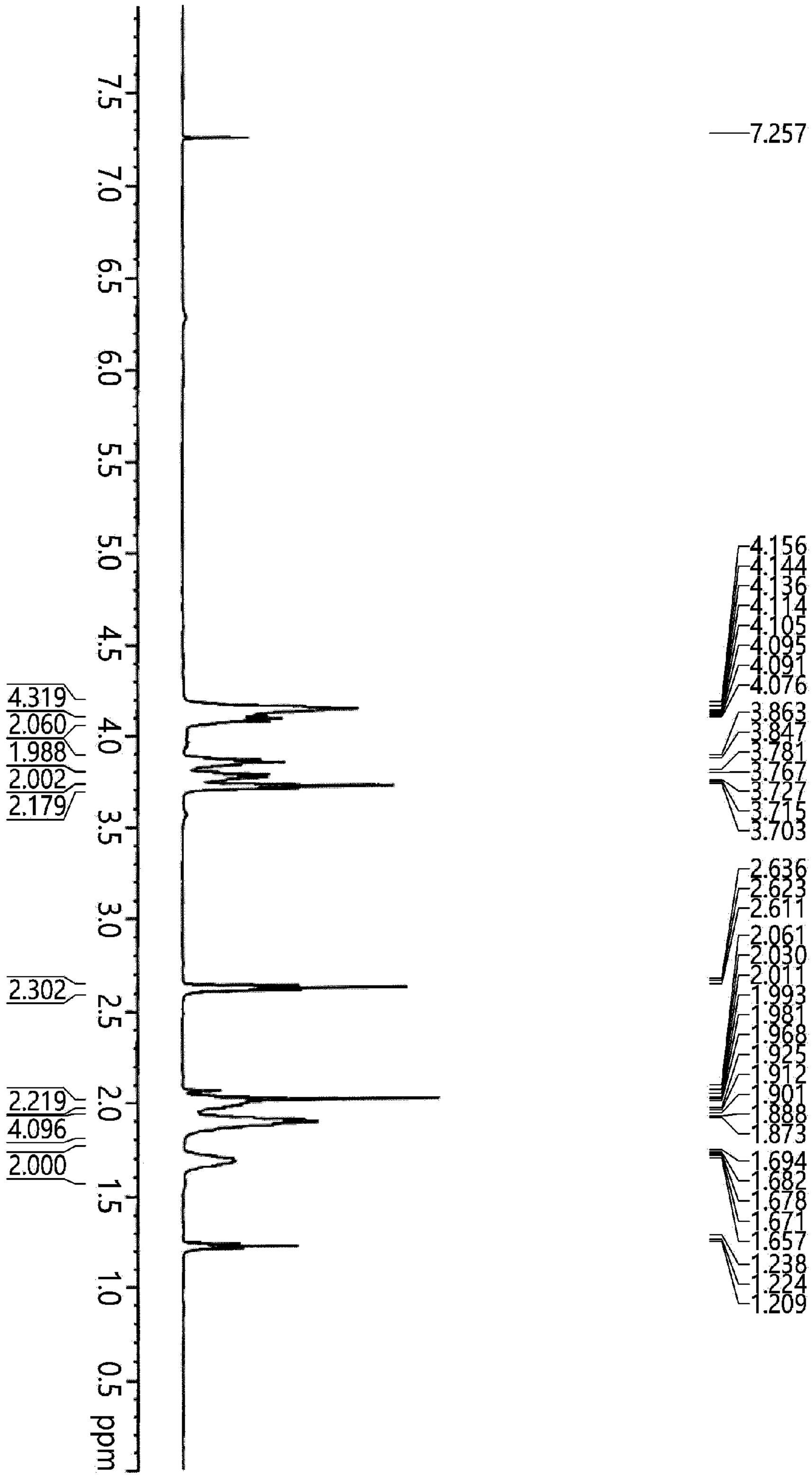
7.5
7.0
6.5
6.0
5.5
5.0
4.5
4.0
3.5
3.0
2.5
2.0
1.5
1.0
0.5 ppm
4.319
2.060
1.988
2.002
2.179
2.302
2.219
4.096
2.000
7.257
4.156
4.144
4.136
4.114
4.105
4.095
4.091
4.076
3.863
3.847
3.781
3.767
3.727
3.715
3.703
2.636
2.623
2.611
2.061
2.030
2.011
1.993
1.981
1.968
1.925
1.912
1.901
1.888
1.873
1.694
1.682
1.678
1.671
1.657
1.238
1.224
1.209

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023224187 A